# EUROPÄISCHE PATENTSCHRIFT

(11) **EP 0 485 888 B1**
(45) Veröffentlichungstag und Bekanntmachung des Hinweises auf die Patenterteilung: **14.08.1996**
(21) Anmeldenummer: 91118978.5
(22) Anmeldetag: 07.11.1991
(51) Int. Cl.: H01S 3/08, H01S 3/081, H01S 3/23

(54) **Laser-Vorrichtung**
Laser apparatus
Appareil laser

(30) Priorität: 14.11.1990 DE 4036154
(43) Veröffentlichungstag der Anmeldung: 20.05.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: Klein, Jürgen, Dipl.-Phys., W-5100 Aachen (DE)

(56) Entgegenhaltungen:
- WO-A-81/02952
- DE-B- 1 171 084
- DE-C- 3 515 679
- US-A- 3 365 671
- US-A- 4 446 556
- APPLIED OPTICS, Bd. 19, Nr. 10, Mai 1980, NEW YORK; Seiten 1567-1569; J.L. LACHAMBRE: 'LONG PULSE 2-GW SINGLE-LONGITUDINAL-MODE CO2 SOURCE FOR LASER-MATTER INTERACTION STUDIES'

## Beschreibung

Die Erfindung betrifft eine Laservorrichtung nach dem Oberbegriff des Anspruches 1.

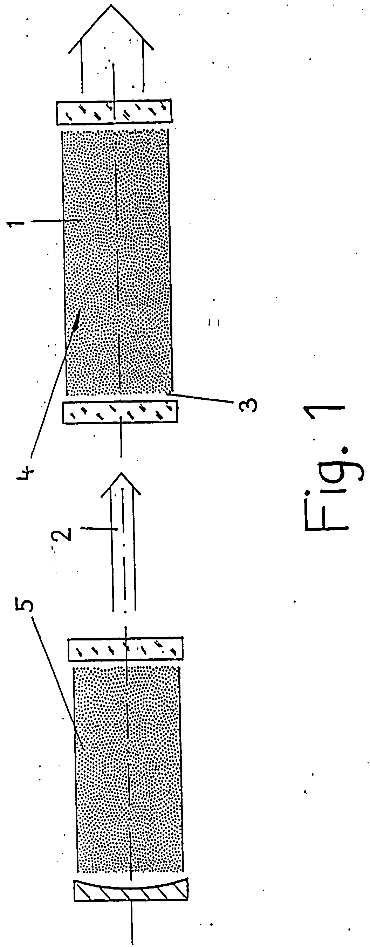

Der gebräuchliste Weg zur Erzeugung von Laserstrahlung einer vorgegebenen Ausgangsleistung ist der Einsatz eines Laseroszillators. Die Kombination aus einem Laseroszillator geringerer Leistung und einem Laserverstärker wird insbesondere dann eingesetzt, wenn ein Laserstrahl hoher Ausgangsleistung und gleichzeitig guter Strahlqualität und/oder hoher Modulationsbandbreite gefordert ist. Nachteile herkömmlicher Laserverstärker, sogenannter Single-Pass-Verstärker, wie in Fig. 1 dargestellt, sind u.a. die schlechte Ausnutzung des verstärkenden Mediums 1 durch den noch schwachen Oszillatorstrahl 2 im Eingangsbereich 3 des Verstärkers 4, die bei schwach verstärkenden Medien erforderliche große Baulänge und der im Vergleich zu Leistungs-Laseroszillatoren erhöhte konstruktive Aufwand für separate Oszillatoren 5 und Verstärker 4.

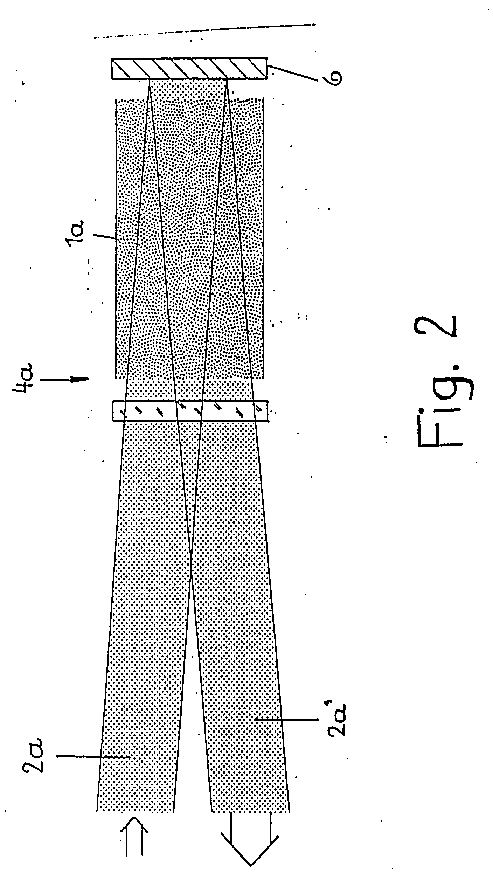

Um einige dieser Nachteile des Verstärkers zu verringern, kann der Laserstrahl 2a bei einem anderen bekannten Verstärker, einem sogenannten Multi-Pass-Verstärker, wie er in Fig. 2 schematisch dargestellt ist, das verstärkende Medium la mehrfach durchlaufen. Hier ist anstelle des in Einfallrichtung des Oszillatorstrahles 2a rückwärtigen Fensters, wie es beim Single-Pass-Verstärker gemäß Fig. 1 vorgesehen ist, ein Faltungsspiegel 6 vorgesehen, an dem der Laserstrahl 2a reflektiert wird.

Die zur Erzielung einer vorgegebenen Verstärkung erforderliche Baulänge verringert sich, und die im Eingangsbereich von Single-Pass-Verstärkern auftretenden Bereiche mit kaum ausgenutztem verstärkendem Medium werden verkleinert. Nachteilig beim Multi-Pass-Verstärker ist jedoch, daß eine räumliche Trennung der in einem kleinen Winkel zueinander verlaufenden hin- und rücklaufenden Strahlen 2a, 2a' erst in einem großen Abstand vom Verstärkerrohr erfolgen kann, wodurch ein kompakter Aufbau des Systems erschwert wird.

Bei der gattungsgemäßen Laservorrichtung (US-A-3 365 671) durchläuft der zu verstärkende Laserstrahl das Lasermedium mehrmals, wobei der Strahl an den Faltungsspiegeln jeweils reflektiert wird. Nach mehreren Durchläufen durch das Lasermedium tritt der verstärkte Strahl durch die Austrittsöffnung des einen Faltungsspiegels aus.

Es ist ein Laseroszillator bekannt (US-A-4 446 556), in den ein Pumpstrahl durch eine Öffnung in einem Faltungsspiegel eingebracht wird. Der Pumpstrahl hat die Aufgabe, das Lasermedium im Laseroszillator so anzuregen, daß ein FIR-Laserstrahl mit der gewünschten Wellenlänge entsteht.

Der Erfindung liegt die Aufgabe zugrunde, die gattungsgemäße Laservorrichtung so auszubilden, daß das Lasermedium im Laserverstärker bei kompakter Ausbildung der Laservorrichtung optimal ausgenutzt werden kann.

Diese Aufgabe wird bei der gattungsgemäßen Laservorrichtung erfindungsgemäß mit den kennzeichnenden Merkmalen des Anspruches 1 gelöst.

Bei der erfindungsgemäßen Laservorrichtung wird der zu verstärkende Laserstrahl in die Eintrittsöffnung fokussiert. Der vom Laseroszillator kommende, zu verstärkende Laserstrahl verläßt den Laserverstärker nach einer entsprechenden Zahl von Durchgängen durch das Lasermedium durch die Austrittsöffnung. Dabei wird der verstärkte Laserstrahl nach der letzten Reflexion in die Austrittsöffnung fokussiert. Infolge der erfindungsgemäßen Ausbildung steigt der Strahldurchmesser des zu verstärkenden Laserstrahls nach dem Durchtritt durch die Eintrittsöffnung rasch an, verändert sich dann während der Durchläufe durch das Lasermedium kaum und nimmt dann kurz vor dem Austritt wieder rasch ab. Dadurch ergibt sich bei kompakter Ausbildung des Laserverstärkers eine optimale Ausnutzung des Lasermediums.

Weitere Merkmale der Erfindung ergeben sich aus den weiteren Ansprüchen.

Die Erfindung wird anhand einiger in den Zeichnungen dargestellter Ausführungsbeispiele näher erläutert. Es zeigen
- Fig. 3: in schematischer Darstellung eine erste Ausführungsform einer erfindungsgemäßen Laservorrichtung,
- Fig. 4: in schematischer Darstellung einen Laserverstärker einer zweiten Ausführungsform einer erfindungsgemäßen Laservorrichtung,
- Fig. 5: in Stirnansicht einen Laserverstärker einer dritten Ausführungsform einer erfindungsgemäßen Laservorrichtung,
- Fig. 6: einen Laserverstärker mit integriertem Laseroszillator einer vierten Ausführungsform einer erfindungsgemäßen Laservorrichtung,
- Fig. 7: in schematischer Darstellung einen Laserverstärker mit Hilfsresonator einer fünften Ausführungsform einer erfindungsgemäßen Laservorrichtung,
- Fig. 8: die Übertragungskennlinie des Laserverstärkers gemäß Fig. 7.

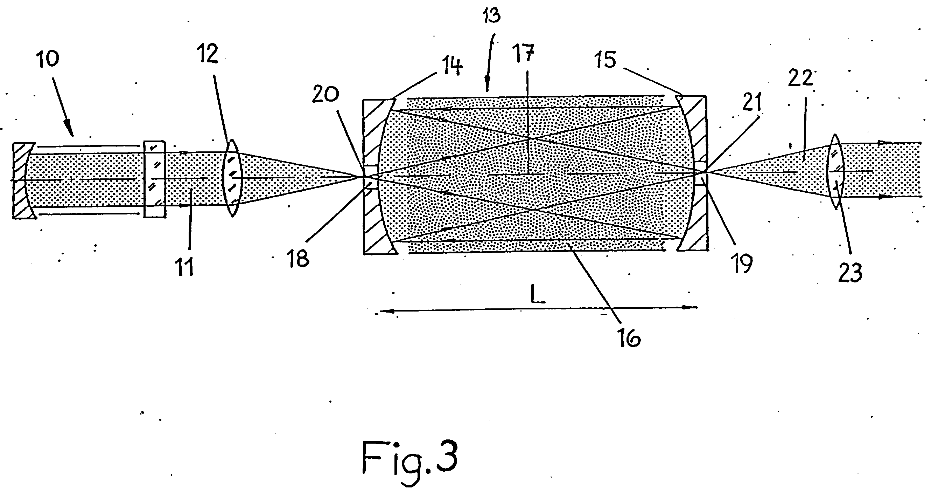

Die Laservorrichtung gemaß Fig. 3 hat einen Laseroszillator 10, der in bekannter Weise ausgebildet ist. Der aus ihm austretende Laserstrahl 11 wird durch eine Fokussieroptik 12 fokussiert. Dem Laseroszillator 10 ist ein Laserverstärker 13 nachgeschaltet, der stirnseitig von zwei Faltungsspiegeln 14 und 15 begrenzt ist. Im Laserverstärker 13 befindet sich das aktive Lasermedium 16, das in bekannter Weise durch einen (nicht dargestellten) Pumpmechanismus angeregt wird. Die Faltungsspiegel 14 und 15 sind konkav ausgebildet und weisen in der optischen Achse 17 jeweils eine Öffnung 18 und 19 auf, deren Durchmesser im Vergleich zur Spiegelfläche klein ist. Die Fokussieroptik 12 ist so ausgebildet und angeordnet, daß der aus dem Laseroszillator 10 austretende Laserstrahl 11 in die Öffnung 18 des Faltungsspiegels 14 fokussiert wird. Der Fokus 20 befindet sich somit in dieser Öffnung 18. Hinter diesem Fokus 20 vergrößert sich der Strahldurchmesser wieder bis zum gegenüberliegenden Faltungsspiegel 15. Dort wird der Laserstrahl zum ersten Faltungsspiegel 14 reflektiert, an dem der Laserstrahl dann wieder zum Faltungsspiegel 15 zurück reflektiert wird. Durch diese mehrfache Reflexion an den konkaven Faltungsspiegeln 14 und 15 wird der Strahldurchmesser im Laserverstärker 13 wieder verringert. Durch geeignete Wahl der Spiegelradien läßt sich somit erreichen, daß der Strahl nach einer ungeraden Anzahl N von Durchgängen durch den Verstärker 13 auf den zweiten Faltungsspiegel 15 fokussiert wird. Vorteilhaft erfolgt diese Fokussierung so, daß der Fokus 21 mittig innerhalb der Öffnung 19 des Faltungsspiegels 15 liegt. Durch diese Öffnung 19 kann dann der fokussierte Laserstrahl 22 aus dem Verstärker 13 austreten. Hinter dem Verstärker 13 wird der Laserstrahl 22 dann in bekannter Weise mit einer geeigneten Optik 23 parallelisiert. Im dargestellten Ausführungsbeispiel durchläuft der Laserstrahl 11 das Lasermedium 16 im Verstärker 13 dreimal. Die Zahl N der Durchgänge durch den Verstärker 13 kann durch entsprechende Wahl der Spiegelradien verändert werden, so daß auch eine größere Zahl von Durchgängen ohne weiteres erreicht werden kann.

Da der Laserstrahl 11 durch die Fokussieroptik 12 in die Öffnung 18 des Faltungsspiegels 14 fokussiert wird, steigt der Strahldurchmesser nach dem Eintritt in den Verstärker 13 sehr rasch an und verändert sich dann während einiger Durchläufe durch den Verstärker kaum. Anschließend nimmt der Strahldurchmesser in Richtung auf die Auskoppelöffnung 19 sehr schnell ab. Auf diese Weise wird das verstärkende Lasermedium 16 bei kompakter Ausbildung des Laserverstärkers 13 gut ausgenutzt.

Da sich die beiden Öffnungen 18 und 19 der Faltungsspiegel 14 und 15 in der optischen Achse 17 befinden, wird bei jeder Reflexion ein der Fläche dieser Öffnungen 18, 19 entsprechender Anteil der Laserstrahlung gerade aus dem Zentrum dieses Strahles entfernt. Außerdem stellt sich zwischen den hoch reflektierenden Faltungsspiegeln 14 und 15 eine Laseroszillation mit hoher Intensität ein, die wegen der Sättigung des Lasermediums 16 die nutzbare Verstärkung verringert.

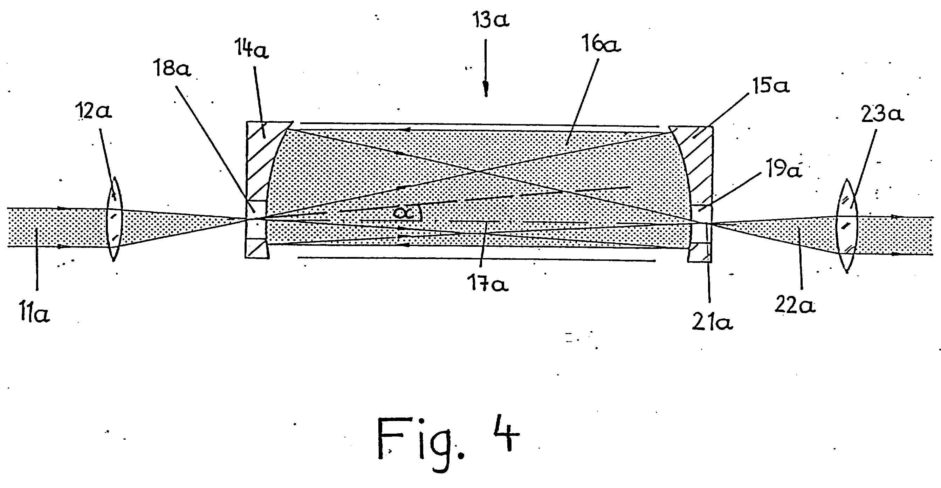

Aus diesem Grunde sind bei der Ausführungsform gemäß Fig. 4 die Faltungsspiegel 14a, 15a gegenüber ihrer Verbindungsachse gekippt angeordnet. Die optische Achse 17a des von den Faltungsspiegeln 14a, 15a gebildeten Resonators kann auf diese Weise in die Nähe der Berandung der freien Apertur des Verstärkers 13a verlegt werden, wodurch zuverlässig sein Anschwingen als Oszillator verhindert wird. Die nutzbare Verstärkung dieses Verstärkers 13a ist darum sehr hoch.

Der vom (nicht dargestellten) Laseroszillator kommende Laserstrahl 11a wird wiederum mit der Fokussieroptik 12a in die Einkoppelöffnung 18a des Faltungsspiegels 14a fokussiert. Der Laserstrahl 11a wird unter einem spitzen Winkel α zur optischen Achse 17a in den Verstärker 13a eingestrahlt. Wie beim Ausführungsbeispiel nach Fig. 3 wird der Laserstrahl nach einer ungeraden Anzahl von Durchgängen durch das aktive Lasermedium 16a auf den zweiten Faltungsspiegel 15a so fokussiert, daß der Fokus 21a in der Auskoppelöffnung 19a des Faltungsspiegels 15a liegt. In Austrittsrichtung hinter dem Verstärker 13a befindet sich die Optik 23a, mit welcher der austretende, verstärkte Laserstrahl 22a wie beim vorigen Ausführungsbeispiel parallelisiert wird. Durch geeignete Wahl der Spiegelradien läßt sich die Anzahl N von Durchgängen durch den Verstärker 13a gezielt verändern. Der in den Verstärker 13a eintretende Laserstrahl 11a nimmt im Durchmesser zunächst wiederum sehr rasch zu und ändert sich während einiger Durchläufe durch das Lasermedium 16a praktisch nicht. Erst gegen Ende der Durchläufe nimmt der Strahldurchmesser wieder schnell ab. Somit ergibt sich wiederum eine hervorragende Ausnutzung des verstärkenden Lasermediums 16a. Die Verluste durch die Einkoppelöffnung 18a bzw. Auskoppelöffnung 19a bei den Reflexionen an den Faltungsspiegeln 14a, 15a sind jedoch sehr gering, weil sich diese Öffnungen 18a, 19a - im Gegensatz zum vorigen Ausführungsbeispiel - im Randbereich des Strahles befinden. In diesen Strahlrandbereichen ist die Intensität des Strahles im allgemeinen geringer als im Strahlzentrum, so daß die hier auftretenden Verluste sehr gering sind.

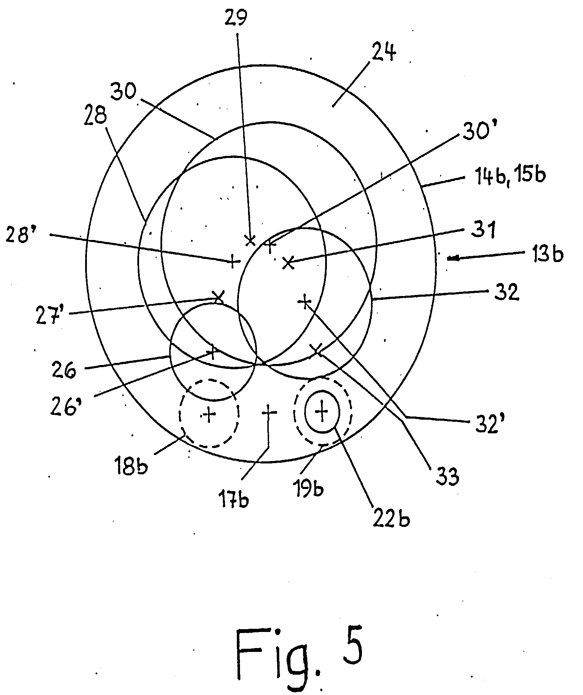

Während bei den zuvor beschriebenen Ausführungsbeispielen die Einkoppel- und Auskoppelöffnungen 18, 19 und 18a, 19a in der optischen Achse 17, 17a des Laserverstärkers 13, 13a liegen, sind diese Öffnungen beim Ausführungsbeispiel nach Fig. 5 symmetrisch zur optischen Achse versetzt angeordnet. Die beiden Faltungsspiegel 14b, 15b, von denen in Fig. 5 wegen der Stirnansicht nur ein Faltungsspiegel erkennbar ist, sind wiederum gegenüber ihrer Verbindungsachse gezielt gekippt angeordnet. Dadurch kann die optische Achse 17b wiederum so in die Nähe der Berandung der freien Apertur 24 des Laserverstärkers 13b verlegt werden, daß sein Anschwingen als Oszillator zuverlässig verhindert wird. Symmetrisch beiderseits der optischen Achse 17b befinden sich die Einkoppelöffnung 18b und die Auskoppelöffnung 19b. Sie sind ebenfalls nahe dem Rand der Faltungsspielgel 14b, 15b vorgesehen. Der vom Laseroszillator kommende Laserstrahl wird in der schon beschriebenen Weise in die Einkoppelöffnung 18b des Faltungsspiegels 14b fokussiert. Der Oszillatorstrahl wird wiederum in einem Winkel zur optischen Achse 17b in den Laserverstärker 13b eingestrahlt. Die Radien der Faltungsspiegel 14b, 15b sind in diesem Ausführungsbeispiel so gewählt, daß der eintretende Laserstrahl nach neun Durchgängen durch den Laserverstärker 13b auf den zweiten Faltungsspiegel 15b fokussiert wird und den Verstärker 13b durch die Auskoppelöffnung 19b verlassen kann. Die Auftreffpunkte der Strahlachse auf den Faltungsspiegeln 14b, 15b bei den neun Durchgängen sind in Fig. 5 mit Kreuzen gekennzeichnet. Infolge der optimierten Einstrahlrichtung des zu verstärkenden Laserstrahles liegen die Auftreffpunkte auf einer Parabel.

In Fig. 5 sind die Strahlquerschnitte 26 bis 30 (doppelter 86%-Radius eines Gaußschen Strahls) auf den hinteren Faltungsspiegel 15b durch Kreise gekennzeichnet. Der durch die Einkoppelöffnung 18b in den Verstärker 13b eintretende Laserstrahl trifft mit einem Strahlquerschnitt 26 und der Strahlachse 26' auf den hinteren Faltungsspiegel 15b. Von dort wird der Laserstrahl zum vorderen Faltungsspiegel 14b reflektiert. Der entsprechende Auftreffpunkt der Strahlachse ist mit 27' bezeichnet. Von dort wird der Laserstrahl wieder zum rückwärtigen Faltungsspiegel 15b reflektiert. Der Auftreffpunkt der Strahlachse ist mit 28' und der zugehörige Strahlquerschnitt mit 28 bezeichnet. Der Strahlquerschnitt 28 ist erheblich größer als der Strahlquerschnitt 26 nach dem ersten Durchgang. Der Laserstrahl wird nun erneut zum vorderen Faltungsspiegel 14b reflektiert, auf den die Strahlachse im Punkt 29 auftrifft. Von hier wird der Laserstrahl erneut zum hinteren Faltungsspiegel 15b reflektiert, wobei die Strahlachse im Auftreffpunkt 30' auf ihn trifft. Der zugehörige Strahlquerschnitt ist mit 30 bezeichnet. Nach diesem fünften Durchgang hat der Laserstrahl seinen größten Strahldurchmesser. Bei der erneuten Reflexion trifft die Strahlachse im Auftreffpunkt 31 auf den vorderen Faltungsspiegel 14b, an dem der Laserstrahl erneut zum hinteren Faltungsspiegel 15b reflektiert wird. Hier trifft die Strahlachse im Punkt 32' auf den rückwärtigen Faltungsspiegel 15b mit dem Strahlquerschnitt 32. Er hat wieder abgenommen, wie ein Vergleich zum Strahlquerschnitt 30 zeigt. Der reflektierte Laserstrahl trifft nochmals auf den vorderen Faltungsspiegel 14b (Auftreffpunkt 33), von dem er dann in der beschriebenen Weise auf den rückwärtigen Faltungsspiegel 15b so reflektiert wird, daß der Strahl durch die Auskoppelöffnung 19b aus dem Verstärker 13b austreten kann.

Da die Einkoppelöffnung 18b und die Auskoppelöffnung 19b symmetrisch versetzt zur optischen Achse 17b des Laserverstärkers 13b angeordnet sind, wird vermieden, daß der aus dem Laserverstärker austretende fokussierte Laserstrahl 22b und der schwache, durch die Einkoppelöffnung 18b in den Laserverstärker 13b eintretende Oszillatorstrahl einander überschneiden, was wegen der Sättigung des Mediums eine Verringerung der Verstärkung bedeuten würde. Außerdem ergibt sich im Vergleich zur Ausführungsform gemäß Fig. 4 ein noch geringerer Verlust, weil der reflektierte Strahl durch die beiden Öffnungen 18b, 19b kaum noch erfaßt wird.

Wie Fig. 5 zeigt, entsteht durch diese Anordnung ein vom Laserstrahl kaum genutzter Bereich im Verstärker 13b entlang der optischen Achse 17b der Faltungsspiegel 14b, 15b. Dadurch besteht die Möglichkeit, den Laseroszillator in den Laserverstärker zu integrieren.

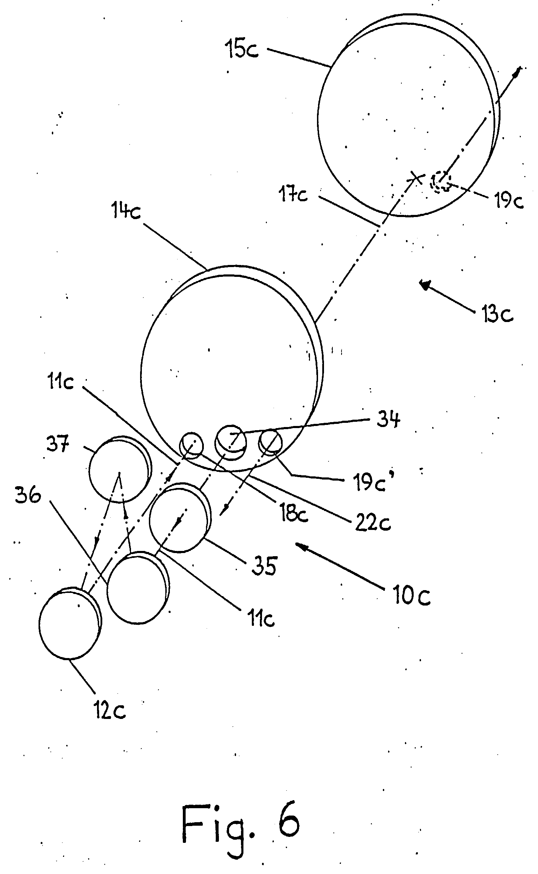

Eine solche Ausbildung einer Laservorrichtung zeigt schematisch Fig. 6. Der Laserverstärker 13c hat die endseitigen Faltungsspiegel 14c und 15c, die gegenüber ihrer Verbindungsachse gezielt gekippt angeordnet sind. Die optische Achse 17c des von den Faltungsspiegeln 14c, 15c gebildeten Resonators kann wiederum in die Nähe der Berandung der freien Apertur des Verstärkers 13c gelegt werden. Der vordere Faltungsspiegel 14c hat die Einkoppelöffnung 18c und der hintere Faltungsspiegel 15c die mit gestrichelten Linien dargestellte Auskoppelöffnung 19c. Bei der hier zu beschreibenden Variante weist der vordere Faltungsspiegel 14c zusätzlich zur Einkoppelöffnung 18c eine in der optischen Achse 17c liegende Öffnung 34 auf. Die Einkoppelöffnung 18c und die Auskoppelöffnung 19c liegen entsprechend dem Ausführungsbeispiel gemäß Fig. 5 symmetrisch beiderseits der optischen Achse 17c. Der durch die Einkoppelöffnung 18c in den Laserverstärker 13c eintretende Laserstrahl 11c wird in der beschriebenen Weise zwischen den Faltungsspiegeln 14c und 15c mehrmals reflektiert und beim letzten Durchgang so auf den Faltungsspiegel 15c fokussiert, daß der Laserstrahl den Verstärker 13c durch die Auskoppelöffnung 19c verlassen kann. Insoweit sind die Verhältnisse gleich wie beim vorigen Ausführungsbeispiel. Da der Bereich um die optische Achse 17c vom Laserstrahl innerhalb des Verstärkers 13c kaum genutzt wird, ist bei diesem Ausführungsbeispiel in diesem Bereich der Laseroszillator 10c untergebracht. Der hintere Faltungsspiegel 15c kann bei der beschriebenen Anordnung als Endspiegel des Laseroszillators 10c eingesetzt werden. Der am hinteren Faltungsspiegel 15c reflektierte Laserstrahl gelangt durch die Öffnung 34 im vorderen Faltungsspiegel 14c auf eine teiltransmittierende Auskoppelplatte 35. Dieser teiltransmittierende Spiegel bildet zusammen mit einem Teil des rückwärtigen Faltungsspiegels 15c den optischen Laseroszillator 10c. Der durch den teiltransmittierenden Spiegel 35 gelangende Laserstrahl 11c wird durch zwei Umlenkspiegel 36 und 37 zur Fokussieroptik 12c umgelenkt, welche im Ausführungsbeispiel als Fokussierspiegel ausgebildet ist und den Laserstrahl in der oben schon beschriebenen Weise in die Einkoppelöffnung 18c des Faltungsspiegels 14c fokussiert. Bei Bedarf kann ein schneller, an sich bekannter Leistungsmodulator zwischen dem Laseroszillator 10c und dem Laserverstärker 13c eingefügt werden.

Bei einer anderen, nicht dargestellten Ausführungsform kann im hinteren Faltungsspiegel 15c auf der optischen Achse 17c eine Öffnung vorgesehen sein, hinter der ein separater Endspiegel, ein optisches Gitter, ein Polarisator, ein optischer Modulator zur Güteschaltung des Oszillators und dgl. angeordnet ist.

Fig. 6 zeigt mit ausgezogenen Linen eine weitere Ausführungsform einer Laservorrichtung. In diesem Falle befindet sich die Auskoppelöffnung 19c' im vorderen Faltungsspiegel 14c. Die Einkoppelöffnung 18c und diese Auskoppelöffnung 19c' liegen wiederum symmetrisch zur optischen Achse 17c der beiden Faltungsspiegel 14c, 15c. Die Auskoppelöffnung 19c' ist so gelegt, daß der aus ihr austretende Laserstrahl 22c nicht durch den Laseroszillator 10c behindert wird. Im übrigen entspricht dieses Ausführungsbeispiel der zuvor beschriebenen Ausführungsform. Da die Einkoppelöffnung 18c und die Auskoppelöffnung 19c' im vorderen Faltungsspiegel 14c vorgesehen sind, kann die Baulänge des Laserverstärkers 13c verringert werden, weil die Parallelisierungsoptik, die in Fig. 6 der Übersichtlichkeit wegen nicht eingezeichnet ist, nicht hinter dem Faltungsspiegel 15c, sondern auf der gleichen Seite wie die ohnehin erforderliche Fokussierungsoptik 12c angeordnet ist.

Auch bei der Ausführungsform gemäß Fig. 5 können die Einkoppel- und die Auskoppelöffnung 18b und 19b am gleichen Faltungsspiegel vorgesehen werden.

Durch asphärische Spiegelflächen der Faltungsspiegel und eine geeignete Wahl der Einstrahlrichtung in den Laserverstärker kann bei den beschriebenen Ausführungsbeispielen der Strahlverlauf im Verstärker auch an Verstärkerrohre mit nicht kreisförmigem, sondern beispielsweise elliptischem oder rechteckigem Querschnitt angepaßt werden.

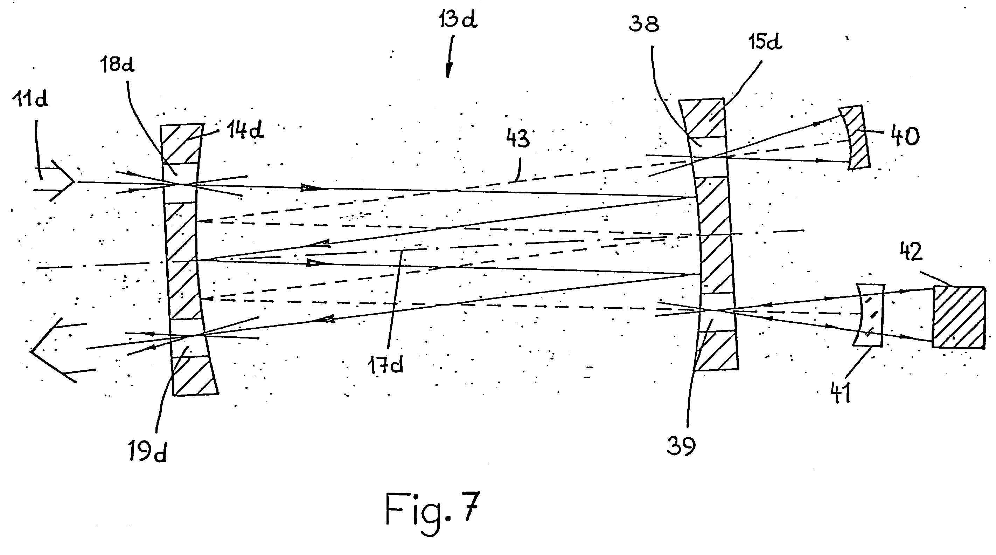

Die Übertragungskennlinie eines Laserverstärkers ist im allgemeinen nicht linear, weil mit zunehmender Eingangsleistung durch Sättigungseffekte die Verstärkung abnimmt. Fig. 7 zeigt nun ein Ausführungsbeispiel eines Laserverstärkers, bei dem die Übertragungskennlinie über einen weiten Bereich der Eingangsleistung linear ist. Um dies zu erreichen, können die Faltungsspiegel in den oben beschriebenen Ausführungsformen mit einer oder zwei weiteren Bohrungen versehen sein. Dies soll anhand der Fig. 7 näher erläutert werden. Sie zeigt die beiden Faltungsspiegel 14d und 15d in einer gegenüber Fig. 4 um 90° verdrehten Lage, so daß die zusätzlichen Öffnungen 38 und 39 im Faltungsspiegel 15d erkennbar sind. Der zu verstärkende Laserstrahl 11d tritt durch die Einkoppelöffnung 18d des Faltungsspiegels 14d ein und verläßt den Verstärker 13d im Ausführungsbeispiel nach vier Durchgängen durch die Auskoppelöffnung 19d im Faltungsspiegel 18d. Der Faltungsspiegel 15d fokussiert den Laserstrahl wiederum in die Auskoppelöffnung 19d. Die Einkoppelöffnung 18d und die Auskoppelöffnung 19d liegen wiederum symmetrisch beiderseits der optischen Achse 17d der beiden Faltungsspiegel 14d, 15d.

Mit ausreichendem Abstand hinter der Öffnung 38 des Faltungsspiegels 15d ist ein Endspiegel 40 vorgesehen, während mit ausreichendem Abstand hinter der Öffnung 39 ein teiltransmittierender Spiegel 41 angeordnet ist. Der Krümmungsradius der Spiegelflächen dieser beiden Spiegel 40 und 41 wird so gewählt, daß ein Laseroszillator entsteht, dessen Modenvolumen das verstärkende Lasermedium im Verstärker 13d weitgehend erfaßt. Der den teildurchlässigen Spiegel 41 durchquerende Teil der Strahlung wird in einem sogenannten Strahlsumpf 42 absorbiert, der beispielsweise eine geschwärzte Aluminium- oder Kupferplatte sein kann. Dieser Oszillator stellt über seine Strahlungsleistung und die resultierende Sättigung des Lasermediums im Verstärker 13d diejenige (konstante) Verstärkung ein, welche die Verluste durch den teiltransmittierenden Spiegel 41 kompensiert. Da dieser Hilfsoszillator und der eigentliche Verstärker 13d das gleiche verstärkende Lasermedium benutzen, ist auch dessen Verstärkung konstant. In Fig. 7 ist die optische Achse dieses Hilfsresonators bzw. Hilfsozillators mit 43 gekennzeichnet.

Der Faltungsspiegel 15d kann auch nur eine Öffnung 38 oder 39 aufweisen, hinter der ein teildurchlässiger Spiegel mit nachgeschaltetem Strahlabsorber angeordnet ist. In diesem Fall liegt diese Öffnung 38 bzw. 39 in der optischen Achse 17d.

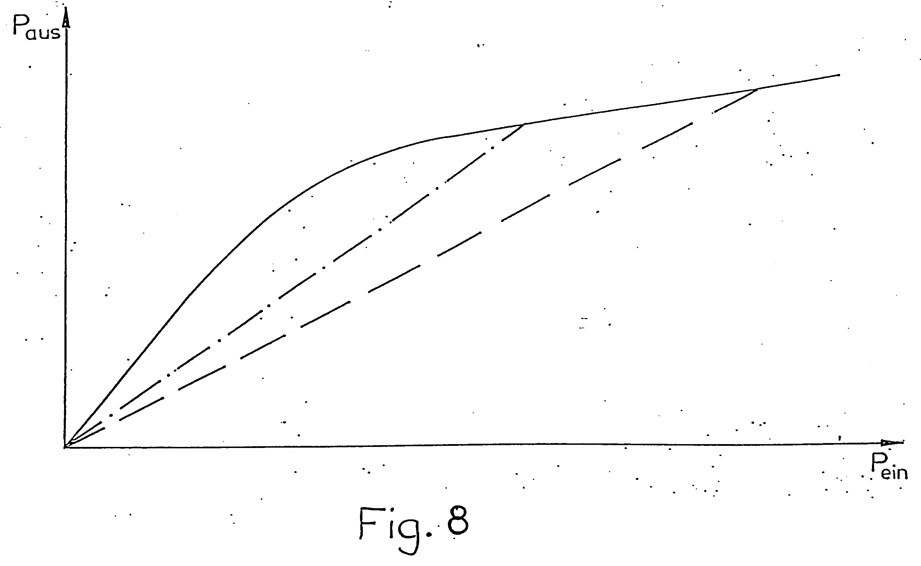

Die Verstärkung ist über die Transmission des teildurchlässigen Spiegels 41 einstellbar. Beim Überschreiten einer bestimmten Eingangsleistung erlischt die Oszillation des Hilfsoszillators (Hilfsresonators). In Fig. 8 ist die Übertragungskennlinie des Verstärkers 13d dargestellt. Hier sind die Eingangsleistung Pₑᵢₙ gegen die Ausgangsleistung Pₐᵤₛ aufgetragen. Die Kennlinie des Verstärkers ohne den Hilfsoszillator ist mit der ausgezogenen Linie dargestellt.

Deutlich erkennbar ist, daß mit zunehmender Eingangsleistung Pₑᵢₙ die Verstärkung abnimmt und die Ausgangsleistung Pₐᵤₛ nicht linear mit der Eingangsleistung zunimmt. Mittels des Hilfsoszillators kann nun die Kennlinie über einen großen Bereich der Eingangsleistung linearisiert werden. Dies ist in Fig. 8 mit der gestrichelten und der strichpunktierten Kennlinie angegeben. Der Kennlinienverlauf entsprechend der gestrichelten Linie ergibt sich bei niedrigen Transmissionsverlusten des Hilfsoszillators und der mit der strichpunktierten Linie gekennzeichnete Verlauf bei hohen Transmissionsverlusten des Hilfsoszillators. Wie die Kennlinien in Fig. 8 zeigen, erlischt beim Überschreiten einer bestimmten Eingangsleistung Pₑᵢₙ die Oszillation des Hilfsoszillators, und die Ausgangsleistung Pₐᵤₛ des Verstärkers 13d folgt dann der Kennlinie des Verstärkers ohne Hilfsoszillator (ausgezogene Linie). Optimale Verhältnisse liegen vor, wenn die Kennlinie des Verstärkers 13d über dem nutzbaren Bereich des verfügbaren Laseroszillators linear verläuft. Dann erlischt die Oszillation des Hilfsoszillators bei Erreichen der maximal verfügbaren Eingangsleistung.

Weist der Verstärker 13d im Faltungsspiegel 14d die Öffnungen 18d und 19d nicht auf, dann wirkt dieser Verstärker als Laseroszillator mit einer guten Strahlintensität. Ist im Faltungsspiegel 15d nur eine Öffnung 38 oder 39 vorgesehen, dann befindet sich hinter dieser Öffnung außerhalb des Verstärkers der teildurchlässige Spiegel 41 ohne Strahlabsorber 42. Hat der Faltungsspiegel 15d die beiden Öffnungen 38 und 39, dann entfällt lediglich der Strahlabsorber 42. Schließlich ist auch eine Ausführungsform möglich, bei der die beiden Öffnungen 38 und 39 auf den beiden Faltungsspiegeln 14d und 15d vorgesehen sind. Die entsprechenden teildurchlässigen bzw. reflektierenden Spiegel sind in diesen Fällen so anzuordnen, daß die Spiegelflächen senkrecht zur Strahlrichtung im Verstärker liegen.

Bei sämtlichen Ausführungsformen nimmt mit steigender Anzahl N von Durchgängen des Laserstrahles durch das Lasermedium des Verstärkers die Ausnutzung dieses verstärkenden Mediums zu, gleichzeitig allerdings auch die Empfindlichkeit des Systems gegenüber einer Dejustierung der Faltungsspiegel und einer thermischen Linsenwirkung des Lasermediums. Ist N als Ergebnis einer Optimierungsabschätzung vorgegeben, so berechnen sich die Krümmungsradien der Faltungsspiegel aus diesem Wert und der Länge L des Verstärkers. Für eine Geometrie sind verschiedene Kombinationen der beiden Krümmungsradien möglich; so kann einer der beiden Faltungsspiegel stets als Planspiegel ausgebildet werden. Wird ein Faltungsspiegel als Konvex-, der andere als Konkavspiegel ausgebildet, so kann ein verstärkendes Lasermedium mit entlang der optischen Achse veränderlichem Querschnitt ausgenutzt werden. Dies ist beispielsweise in axial geströmten CO₂ Laserverstärkern hoher Leistung vorteilhaft, da durch einen in Strömungsrichtung zunehmenden Querschnitt des Entladungsrohres der durch die Wärmeausdehnung des Lasergases bedingte Druckabfall in Rohren konstanten Querschnittes vermieden wird.

Der Fokusdurchmesser in der Einkoppelöffnung bestimmt bei den beschriebenen Ausführungsbeispielen die Strahldurchmesser auf den Faltungsspiegeln. Der Fokusdurchmesser wird so gewählt, daß die Beugungsverluste an der freien Apertur des Verstärkerrohres nicht zu groß werden, andererseits eine gute Volumenausnutzung gegeben ist. Fig. 5 zeigt das Ergebnis einer entsprechenden Optimierungsrechnung. Der Durchmesser der Ein- bzw. Auskoppelöffnungen sollte mindestens etwa das 1 1/2-fache des jeweiligen Fokusdurchmessers betragen, um die Abschattungsverluste gering zu halten und die Strahlqualität nicht durch Beugungseffekte zu verschlechtern.

In CO₂-Lasern bzw. CO₂-Laserverstärkern mit hoher Ausgangsleistung wird das Arbeitsgas mit hoher Geschwindigkeit durch den Entladungsraum gepumpt. Die Kosten der hierfür notwendigen Pumpen verringern sich, wenn die Entladungskammer strömungsgünstig als relativ kurzes Rohr mit großem freiem Querschnitt ausgebildet ist. Bei einer solchen Ausbildung ist die Erzeugung eines Laserstrahles mit hoher Strahlqualität (Grundmode) und hoher Ausgangsleistung mit den herkömmlichen Laseroszillatoren nicht möglich, während die bekannten single-pass-Verstärker mit geringem Wirkungsgrad arbeiten. Bei den beschriebenen erfindungsgemäßen Laservorrichtungen ist es hingegen möglich, den Verstärker mit hohem Wirkungsgrad in einer solchen kompakten Ausbildung zu realisieren, wobei gleichzeitig viele Nachteile der herkömmlichen Verstärker vermieden werden. Wird der Laseroszillator, wie anhand von Fig. 6 erläutert worden ist, in den Verstärker integriert, so sind die Kosten für diese Grundmode-Strahlungsquelle nicht wesentlich höher als die für einen herkömmlichen Laseroszillator mit gleicher Ausgangsleistung, jedoch deutlich geringerer Strahlqualität. Zusätzlich ist eine fast beliebig schnelle Modulation der Ausgangsleistung durch einen Modulator zwischen Laseroszillator und Laserverstärker möglich. Bei Bedarf kann in diesem Fall die Kennlinie des Laserverstärkers mit geringem Aufwand linearisiert werden.

Die beschriebenen Ausführungsformen sind bei allen Lasertypen mit nur geringer Verstärkung pro Längeneinheit einsetzbar, wenn die Verstärkung über einen relativ großen Querschnitt erzielt werden kann.

Bei den beschriebenen Ausführungsbeispielen kann die Länge des Verstärkers in bekannter Weise beispielsweise durch V-förmige Faltung verringert werden.

## Patentansprüche

1. Laservorrichtung mit einem Laseroszillator und einem nachgeschalteten Laserverstärker (13a bis 13d), der einen Faltungsspiegel (14, 14a bis 14d) aufweist, der als Eintrittsbereich für den zu verstärkenden, vom Laseroszillator kommenden Laserstrahl (11, 11a bis 11d) eine Eintrittsöffnung (18, 18a bis 18d) aufweist, mit einem dem Faltungsspiegel (14, 14a bis 14d) mit Abstand gegenüberliegenden weiteren Faltungsspiegel (15, 15a bis 15d), und mit einer weiteren, als Auslaß für den verstärkten Laserstrahl (22, 22a, 22b) dienenden Austrittsöffnung (19, 19a bis 19c, 19c', 19d) in einem der beiden Faltungsspiegel (14, 14a bis 14d; 15, 15a bis 15d), wobei die Öffnungsweite der Eintrittsöffnung (18, 18a bis 18d) und der Austrittsöffnung (19, 19a bis 19c, 19c', 19d) in bezug auf die Spiegelfläche der jeweiligen Faltungsspiegel (14, 14a bis 14d; 15, 15a bis 15d) klein ist,
dadurch gekennzeichnet, daß der zu verstärkende Laserstrahl (11, 11a bis 11d) in die Eintrittsöffnung (18, 18a bis 18d) fokussiert ist, und daß der der Austrittsöffnung (19, 19a bis 19c, 19c', 19d) gegenüberliegende Faltungsspiegel (14, 14a bis 14c, 15c, 15d) den verstärkten Laserstrahl (22, 22a, 22b) nach der letzten Reflexion im Verstärker in die Austrittsöffnung (19, 19a bis 19c, 19c', 19d) fokussiert,
so daß der Querschnitt des Laserstrahles innerhalb des Laserverstärkers (13a bis 13d) zumindest teilweise um ein Vielfaches größer als im Bereich der Eintritts- und Austrittsöffnung ist.

2. Laservorrichtung nach Anspruch 1,
dadurch gekennzeichnet, daß für den Eintritt des zu verstärkenden Laserstrahls und für den Austritt des verstärkten Laserstrahls jeweils eine Öffnung in wenigstens einem der beiden Faltungsspiegel vorgesehen ist.

3. Laservorrichtung nach Anspruch 1,
dadurch gekennzeichnet, daß für den Ein- und Austrittsöffnung des Laserstrahles eine gemeinsame Öffnung in einem der beiden Faltungsspiegel vorgesehen ist.

4. Laservorrichtung nach einem der Ansprüche 1 bis 3,
dadurch gekennzeichnet, daß die Eintrittsöffnung (18, 18a bis 18d) und die Austrittsöffnung (19, 19a bis 19c, 19c', 19d) an verschiedenen Faltungsspiegeln (14, 14a bis 14d; 15, 15a bis 15d) vorgesehen sind.

5. Laservorrichtung nach einem der Ansprüche 1 bis 4,
dadurch gekennzeichnet, daß die Faltungsspiegel (14a bis 14d, 15a bis 15d) gegenüber ihrer Verbindungsachse gekippt angeordnet sind, wobei vorzugsweise die optische Achse (17a bis 17d) in der Nähe der Berandung der freien Apertur des Laserverstärkers (13a bis 13d) liegt.

6. Laservorrichtung nach einem der Ansprüche 1 bis 5,
dadurch gekennzeichnet, daß der zu verstärkende Laserstrahl (11, 11a, 11c, 11d) unter einem Winkel (α) zur optischen Achse (17, 17a bis 17d) in den Laserverstärker (13, 13a bis 13d) eintritt.

7. Laservorrichtung nach einem der Ansprüche 1 bis 6,
dadurch gekennzeichnet, daß die Eintrittsöffnung (18b, 18c, 18d) und die Austrittsöffnung (19b, 19c, 19d), in Richtung der optischen Achse (17b bis 17d) gesehen, beiderseits, vorzugsweise symmetrisch, der optischen Achse liegen.

8. Laservorrichtung nach einem der Ansprüche 1 bis 7,
dadurch gekennzeichnet, daß in den Laserverstärker (13c) der Laseroszillator (10c) integriert ist, wobei einer der Faltungsspiegel, vorzugsweise der die Eintrittsöffnung (18c) aufweisende Faltungsspiegel (14c) des Laserverstärkers (11c), eine zusätzliche Öffnung (34) aufweist, hinter der ein teildurchlässiger Spiegel (35) des Laseroszillators (10c) angeordnet ist, dessen Endspiegel vorzugsweise der andere Faltungsspiegel (15c) des Laserverstärkers (13c) ist.

9. Laservorrichtung nach Anspruch 8,
dadurch gekennzeichnet, daß dem teildurchlässigen Spiegel (35) des Laseroszillators (10c) für den zu verstärkenden Laserstrahl (11c) eine Umlenkeinrichtung (36, 37) nachgeschaltet ist, der vorzugsweise eine Fokussiereinrichtung (12c) nachgeschaltet ist, die den zu verstärkenden Laserstrahl (11c) in die Eintrittsöffnung (18c) des einen Faltungsspiegels (14c) des Laserverstärkers (13c) fokussiert.

10. Laservorrichtung, insbesondere nach einem der Ansprüche 1 bis 9,
dadurch gekennzeichnet, daß dem Laserverstärker (13d) ein Hilfslaseroszillator zugeordnet ist.

11. Laservorrichtung nach Anspruch 10,
dadurch gekennzeichnet, daß die Eintrittsöffnung (18d) und die Austrittsöffnung (19d) im einen Faltungsspiegel (14d) des Laserverstärkers (13d) angeordnet sind.

12. Laservorrichtung nach Anspruch 10 oder 11,
dadurch gekennzeichnet, daß der andere Faltungsspiegel (15d) wenigstens eine weitere Öffnung (38, 39) aufweist, hinter der ein teildurchlässiger Spiegel (41) des Hilfslaseroszillators angeordnet ist.

13. Laservorrichtung nach einem der Ansprüche 10 bis 12,
dadurch gekennzeichnet, daß der andere Faltungsspiegel (15d) zwei weitere Öffnungen (38, 39) aufweist, und daß hinter der einen weiteren Öffnung (38) im Bereich außerhalb des Laserverstärkers (13d) ein Endspiegel (40) und hinter der anderen weiteren Öffnung (39) im Bereich außerhalb des Laserverstärkers ein teildurchlässiger Spiegel (41) des Hilfslaseroszillators angeordnet sind.

14. Laservorrichtung nach Anspruch 13,
dadurch gekennzeichnet, daß dem Endspiegel (40) des Hilfslaseroszillators als Gegenreflektor einer der beiden Faltungsspiegel (14d, 15d) des Laserverstärkers (13d) zugeordnet ist, der vorzugsweise zusammen mit dem Hilfslaseroszillator das gleiche verstärkende Lasermedium benutzt.

15. Laservorrichtung nach einem der Ansprüche 12 bis 14,
dadurch gekennzeichnet, daß hinter dem teildurchlässigen Spiegel (41) des Hilfslaseroszillators ein Strahlungsabsorber (42) angeordnet ist.

16. Laservorrichtung nach einem der Ansprüche 10 und 12 bis 16,
dadurch gekennzeichnet, daß der eine Faltungsspiegel (14d) geschlossen ausgebildet ist.

17. Laservorrichtung nach einem der Ansprüche 1 bis 16,
dadurch gekennzeichnet, daß der eine der beiden Faltungsspiegel (14, 14a bis 14d; 15, 15a bis 15d) als Planspiegel ausgebildet ist.

18. Laservorrichtung nach einem der Ansprüche 1 bis 16,
dadurch gekennzeichnet, daß beide Faltungsspiegel (14, 14a bis 14d; 15, 15a bis 15d) als Konkavspiegel ausgebildet sind.

19. Laservorrichtung nach einem der Ansprüche 1 bis 16,
dadurch gekennzeichnet, daß der eine Faltungsspiegel (14, 14a bis 14d bzw. 15, 15a bis 15d) als Konvexspiegel und der andere Faltungsspiegel (15, 15a bis 15d bzw. 14, 14a bis 14d) als Konkavspiegel ausgebildet ist.

20. Laservorrichtung nach einem der Ansprüche 1 bis 19,
dadurch gekennzeichnet, daß die Weite der Eintrittsöffnung (18, 18a bis 18d) wenigstens etwa dem eineinhalbfachen Durchmesser des Fokus (20) des zu verstärkenden Laserstrahles (11, 11a, 11c, 11d) in der Eintrittsöffnung (18, 18a bis 18d) des entsprechenden Faltungsspiegels (14, 14a bis 14d) entspricht.

21. Laservorrichtung nach einem der Ansprüche 1 bis 20,
dadurch gekennzeichnet, daß die Weite der Austrittsöffnung (19, 19a bis 19c, 19c', 19d) wenigstens etwa dem eineinhalbfachen Durchmesser des Fokus (21, 21a) des verstärkten Laserstrahles (22, 22a, 22b) in der Austrittsöffnung (19, 19a bis 19c, 19c', 19d) des entsprechenden Faltungsspiegels entspricht.

22. Laservorrichtung nach einem der Ansprüche 1 bis 21,
dadurch gekennzeichnet, daß zwischen dem Laseroszillator (10, 10c) und dem Laserverstärker (13, 13a bis 13d) ein Leistungsmodulator angeordnet ist.

## Claims

1. Laser apparatus including a laser oscillator and a laser intensifier (13a à 13d) joining it, which includes a folding mirror (14, 14a à 14d) having as input area of a laser beam to be intensified (11, 11a to 11d), which is emitted from said laser oscillator, an input opening (18, 18a to 18d), and which includes an additional folding mirror (15, 15a to 15d) opposite to and spaced from said folding mirror (14, 14a to 14d), as well as another output opening (19, 19a to 19c, 19c', 19d) in one of said two folding mirrors (14, 14a to 14d; 15, 15a to 15d), which serves to output the intensified laser beam (22, 22a, 22b), with the opening widths of said input opening (18, 18a to 18d) and said output opening (19, 19a to 19c, 19c', 19d) being small, relative to the reflecting surface of the respective folding mirror (14, 14a to 14d; 15, 15a to 15d),
**characterized in** that the laser beam to be intensified (11, 11a to 11d) is focussed into said input opening (18, 18a to 18d), and that said folding mirror (14, 14a to 14c, 15c, 15d) opposite to said output opening (19, 19a to 19c, 19c', 19d) focusses the intensified laser beam (22, 22a, 22b) after its last reflexion in the intensifier, into said output opening (19, 19a to 19c, 19c', 19d), in a way that the laser beam section inside said laser intensifier (13a to 13d) is at least partially greater by a multiple than its section in the area of said input opening and said output opening.

2. Laser apparatus according to Claim 1,
**characterized in** that one opening respectively is provided in at least one of said folding mirrors for the introduction of the laser beam to be intensified and for the output of the intensified laser beam.

3. Laser apparatus according to Claim 1,
**characterized in** that a common opening is provided in one of said folding mirrors for the input and output of the laser beam.

4. Laser apparatus according to any of Claims 1 to 3,
**characterized in** that said input opening (18, 18a to 18d) and said output opening (19, 19a to 19c, 19c', 19d) are provided on different folding mirrors (14, 14a to 14d; 15, 15a to 15d).

5. Laser apparatus according to any of Claims 1 to 4,
**characterized in** that said folding mirrors (14a to 14d, 15a to 15d) are disposed in a position tilted with respect to their joining axis, with the optical axis (17a to 17d) preferably extending in the vicinity of the edge of the free opening of said laser intensifier (13a to 13d).

6. Laser apparatus according to any of Claims 1 to 5,
**characterized in** that the laser beam to be intensified (11, 11a, 11c, 11d) enters at an angle (α) relative to said optical axis (17, 17a to 17d) in said laser intensifier (13, 13a to 13d).

7. Laser apparatus according to any of Claims 1 to 6,
**characterized in** that, seen along said optical axis, (17b to 17d), said input opening (18b, 18c, 18d) and said output opening (19b, 19c, 19d) are provided on either side of said optical axis, preferably in a symmetrical arrangement.

8. Laser apparatus according to any of Claims 1 to 7,
**characterized in** that said laser oscillator (10c) is integrated into said laser intensifier (13c), with one of said folding mirrors, preferably the folding mirror (14c) of said laser intensifier (11c), which includes said input opening (18c), presenting an additional opening (34) behind which a partially transmitting mirror (35) of said laser oscillator (10c) is disposed whose terminal mirror is preferably the other folding mirror (15c) of said laser intensifier (13c).

9. Laser apparatus according to Claim 8,
**characterized in** that said partially transmitting mirror (35) of said laser oscillator (10c) is joined by a downstream path-folding means (36, 37) for the laser beam to be intensified (11c), which is preferably joined by a focussing means (12c) which focuses said laser beam to be intensified (11c) into said input opening (18c) of one of said folding mirrors (14c) of said laser intensifier (13c).

10. Laser apparatus, particularly according to any of Claims 1 to 9,
**characterized in** that an auxiliary laser oscillator is associated with said laser intensifier (13d).

11. Laser apparatus according to Claim 10,
**characterized in** that said input opening (18d) and said output opening (19d) are disposed in one (14d) of the folding mirrors of said laser intensifier (13d).

12. Laser apparatus according to Claim 10 or 11,
**characterized in** that the other folding mirror (15d) comprises at least one additional opening (38, 39) behind which a partially transmitting mirror (41) of said auxiliary laser oscillator is disposed.

13. Laser apparatus according to any of Claims 10 to 12,
**characterized in** that the other folding mirror (15d) comprises two additional openings (38, 39), and that behind one (39) of these additional openings, in the area outside said laser intensifier (13d), a terminal mirror (40) is disposed while behind the other one (39) of said additional openings a partially transmitting mirror (41) of said auxiliary laser oscillator is disposed in the area outside said laser intensifier.

14. Laser apparatus according to Claim 13,
**characterized in** that one of said folding mirrors (14d, 15d) of said laser intensifier (13d) is associated as counter-reflector to said terminal mirror (40) of said auxiliary laser oscillator, which uses preferably the same intensifying lasing medium jointly with said auxiliary laser oscillator.

15. Laser apparatus according to any of Claims 12 to 14,
**characterized in** that a beam absorber (42) is disposed behind said partially transmitting mirror (41) of said auxiliary laser oscillator.

16. Laser apparatus according to any of Claims 10 and 12 to 15,
**characterized in** that one (41) of said folding mirrors has an enclosed shape.

17. Laser apparatus according to any of Claims 1 to 16,
**characterized in** that one of said folding mirrors (14, 14a to 14d; 15, 15a to 15d) is provided in the form of a plane reflector.

18. Laser apparatus according to any of Claims 1 to 16,
**characterized in** that said two folding mirrors (14, 14a to 14d; 15, 15a to 15d) are provided in the form of a concave reflector.

19. Laser apparatus according to any of Claims 1 to 16,
**characterized in** that one of said folding mirrors (14, 14a to 14d or 15, 15a to 15d, respectively) is designed as convex reflector, and that the other one of said folding mirrors (15, 15a to 15d or 14, 14a to 14d, respectively) has the shape of a concave reflector.

20. Laser apparatus according to any of Claims 1 to 19,
**characterized in** that the width of said input opening (18, 18a to 18d) corresponds, at least approximately, to one and a half times the diameter of the focus (20) of the laser beam to be intensified (11, 11a, 11c, 11d) in said input opening (18, 18a to 18d) of the corresponding folding mirror (14, 14a to 14d).

21. Laser apparatus according to any of Claims 1 to 20,
**characterized in** that the width of said output opening (19, 19a to 19c, 19c', 19d) corresponds, at least approximately, to one and a half times the diameter of the focus (21, 21a) of the intensified laser beam (22, 22a, 22b) in said output opening (19, 19a to 19c, 19c', 19d) of the corresponding folding mirror.

22. Laser apparatus according to any of Claims 1 to 21,
**characterized in** that a high-intensity modulator is disposed between said laser oscillator (10, 10c) and said laser intensifier (13, 13a to 13d).

## Revendications

1. Appareil laser à un oscillateur laser et un amplificateur laser (13a à 13d) lui suivant, qui comprend un miroir replieur (14, 14a à 14d) qui présente, comme zone d'entrée d'un faisceau laser à amplifier (11, 11a à 11d), issu dudit oscillateur laser, une ouverture d'entrée (18, 18a à 18d), et qui comprend un miroir replieur supplémentaire (15, 15a à 15d) opposé à et écarté du miroir replieur (14, 14a à 14d), ainsi qu'une autre ouverture de sortie (19, 19a à 19c, 19c', 19d) dans un desdits deux miroir replieurs (14, 14a à 14d; 15, 15a à 15d), qui sert à la sortie du faisceau laser amplifié (22, 22a, 22b), la largeur d'ouverture de ladite ouverture d'entrée (18, 18a à 18d) et de ladite ouverture de sortie (19, 19a à 19c, 19c', 19d) étant petite par rapport à la surface réflectrice du miroir replieur respectif (14, 14a à 14d; 15, 15a à 15d),
**caractérisé en ce** que le faisceau laser à amplifier (11, 11a à 11d) est focalisé dans ladite ouverture d'entrée (18, 18a à 18d), et en ce que le miroir replieur (14, 14a à 14c, 15c, 15d), opposé à ladite ouverture de sortie (19, 19a à 19c, 19c', 19d) focalise le faisceau laser amplifié (22, 22a, 22b), après la dernière réflexion dans l'amplificateur, dans ladite ouverture de sortie (19, 19a à 19c, 19c', 19d), de facon que la section du faisceau laser à l'intérieur dudit amplificateur laser (13a à 13d) soit plus grande par un multiple, au moins en partie, que sa section dans la zone de ladite ouverture d'entrée et ladite ouverture de sortie.

2. Appareil laser selon la revendication 1,
**caractérisé en ce** que respectivement une ouverture est prévue dans au moins un desdits miroirs replieurs, pour l'entrée du faisceau laser à amplifier et pour la sortie du faisceau laser amplifié.

3. Appareil laser selon la revendication 1,
**caractérisé en ce** qu'une ouverture commune est prévue dans un desdits deux miroirs replieurs pour l'entrée et la sortie du faisceau laser.

4. Appareil laser selon une quelconque des revendications 1 à 3,
**caractérisé en ce** que ladite ouverture d'entrée (18, 18a à 18d) et ladite ouverture de sortie (19, 19a à 19c, 19c', 19d) sont prévues à des miroirs replieurs différents (14, 14a à 14d; 15, 15a à 15d).

5. Appareil laser selon une quelconque des revendications 1 à 4,
**caractérisé en ce** que lesdits miroirs replieurs (14a à 14d, 15a à 15d) sont disposés en position renversée par rapport à leur axe de jonction, l'axe optique (17a à 17d) s'étendant, de préférence, au voisinage du bord de l'ouverture libre dudit amplificateur laser (13a à 13d).

6. Appareil laser selon une quelconque des revendications 1 à 5,
**caractérisé en ce** que le faisceau laser à amplifier (11, 11a, 11c, 11d) entre à un angle (α) relatif audit axe optique (17, 17a à 17d) dans ledit amplificateur laser (13, 13a à 13d).

7. Appareil laser selon une quelconque des revendications 1 à 6,
**caractérisé en ce que**, vue en sens dudit axe optique (17b à 17d), ladite ouverture d'entrée (18b, 18c, 18d) et ladite ouverture de sortie (19b, 19c, 19d) se trouvent des deux côtés dudit axe optique, de préférence en symétrie.

8. Appareil laser selon une quelconque des revendications 1 à 7,
**caractérisé en ce** que ledit oscillateur laser (10c) est intégré dans ledit amplificateur laser (13c), un desdits miroirs replieurs, de préférence le miroir replieur (14c) dudit amplificateur laser (11c), qui comprend ladite ouverture d'entrée (18c), présente une ouverture supplémentaire (34), derrière laquelle est disposé un miroir semi-argenté (35) dudit oscillateur laser (10c), dont le miroir terminal est, de préférence, l'autre miroir replieur (15c) dudit amplificateur laser (13c).

9. Appareil laser selon la revendication 8,
**caractérisé en ce** que ledit miroir semi-argenté (35) dudit oscillateur laser (10c) est suivi d'un système de déviation (36, 37) pour le faisceau laser à amplifier (11c), qui est, de préférence, suivi d'un système de focalisation (12c) qui focalise le faisceau laser à amplifier (11c) dans ladite ouverture d'entrée (18c) d'un desdits miroirs replieurs (14c) dudit amplificateur laser (13c).

10. Appareil laser, en particulier selon une quelconque des revendications 1 à 9,
**caractérisé en ce** qu'un oscillateur laser auxiliaire est affecté audit amplificateur laser (13d).

11. Appareil laser selon la revendication 10,
**caractérisé en ce** que ladite ouverture d'entrée (18d) et ladite ouverture de sortie (19d) sont disposées dans l'un (14d) des miroirs replieurs dudit amplificateur laser (13d).

12. Appareil laser selon la revendication 10 ou 11,
**caractérisé en ce** que l'autre miroir replieur (15d) comprend au moins une ouverture supplémentaire (38, 39), derrière laquelle est disposé un miroir semi-argenté (41) dudit oscillateur laser auxiliaire.

13. Appareil laser selon une quelconque des revendications 10 à 12,
**caractérisé en** ce que l'autre miroir replieur (15d) comprend deux ouvertures supplémentaires (38, 39), et en ce que derrière l'une (38) desdites ouvertures supplémentaires, dans la zone à l'extérieur dudit amplificateur laser (13d), un miroir terminal (40) est disposé, et derrière l'autre (39) desdites ouvertures supplémentaires,-dans la zone à l'extérieur dudit amplificateur laser, un miroir semi-argenté (41) dudit oscillateur laser auxiliaire est disposé.

14. Appareil laser selon la revendication 13,
**caractérisé en ce** qu'un desdits miroirs replieurs (14d, 15d) dudit amplificateur laser (13d) est affecté, comme contre-réflecteur, audit miroir terminal (40) dudit oscillateur laser auxiliaire, qui utilise, de préférence, le même milieu laser amplificateur en commun avec ledit oscillateur laser auxiliaire.

15. Appareil laser selon une quelconque des revendications 12 à 14,
**caractérisé en ce** qu'un absorbeur de rayonnement (42) est disposé derrière ledit miroir semi-argenté (41) dudit oscillateur laser auxiliaire.

16. Appareil laser selon une quelconque des revendications 10 et 12 à 15,
**caractérisé en ce** que l'un (41) desdits miroirs replieurs a une configuration entière.

17. Appareil laser selon une quelconque des revendications 1 à 16,
**caractérisé en ce** que l'un desdits deux miroirs replieurs (14, 14a à 14d; 15, 15a à 15d) est prévu sous forme d'un miroir plan.

18. Appareil laser selon une quelconque des revendications 1 à 16,
**caractérisé en ce** que lesdits deux miroirs replieurs (14, 14a à 14d; 15, 15a à 15d) sont prévus sous forme d'un miroir concave.

19. Appareil laser selon une quelconque des revendications 1 à 16,
**caractérisé en ce** que l'un desdits miroirs replieurs (14, 14a à 14d ou respectivement 15, 15a à 15d) est configuré comme miroir convexe, et que l'autre desdits miroirs replieurs (15, 15a à 15d ou respectivement 14, 14a à 14d) présente la forme d'un miroir concave.

20. Appareil laser selon une quelconque des revendications 1 à 19,
**caractérisé en ce** que la largeur de ladite ouverture d'entrée (18, 18a à 18d) correspond, au moins environ, à une fois et demie le diamètre du foyer (20) du faisceau laser à amplifier (11, 11a, 11c, 11d) dans ladite ouverture d'entrée (18, 18a à 18d) du miroir replieur correspondant (14, 14a à 14d).

21. Appareil laser selon une quelconque des revendications 1 à 20,
**caractérisé en ce** que la largeur de ladite ouverture de sortie (19, 19a à 19c, 19c', 19d) correspond, au moins environ, à une fois et demie le diamètre du foyer (21, 21a) du faisceau laser amplifié (22, 22a, 22b) dans ladite ouverture de sortie (19, 19a à 19c, 19c', 19d) du miroir replieur correspondant.

22. Appareil laser selon une quelconque des revendications 1 à 21,
**caractérisé en ce** qu'un modulateur de puissance est disposé entre ledit oscillateur laser (10, 10c) et ledit amplificateur laser (13, 13a à 13d).
